# EUROPEAN PATENT SPECIFICATION

(11) **EP 3 563 919 B1**
(45) Date of publication and mention of the grant of the patent: **01.09.2021**
(21) Application number: 17886850.1
(22) Date of filing: 27.12.2017
(51) Int. Cl.: B01J 20/28, C01F 7/00, D06M 11/36, B01D 39/16

(54) **FILTRATION BODY USING LAYERED DOUBLE HYDROXIDE AND METHOD FOR MANUFACTURING SAID FILTRATION BODY**
FILTRATIONSKÖRPER MIT GESCHICHTETEM DOPPELHYDROXID UND VERFAHREN ZUR HERSTELLUNG DES FILTRATIONSKÖRPERS
CORPS DE FILTRATION UTILISANT UN HYDROXYDE DOUBLE LAMELLAIRE ET PROCÉDÉ DE FABRICATION DUDIT CORPS DE FILTRATION

(30) Priority: 27.12.2016 JP 2016253377; 27.12.2016 JP 2016253378
(43) Date of publication of application: 06.11.2019
(73) Proprietor: JDC Corporation, Tokyo 107-8466 (JP)
(72) Inventor: OHNO, Mutsuhiro, Tokyo 107-8466 (JP); KOBAYASHI, Yutaka, Tokyo 107-8466 (JP); ASAKURA, Takeo, Tokyo 107-8466 (JP)
(74) Representative: Ishiguro, Masaoki
(86) International application number: PCT/JP2017/046944
(87) International publication number: WO 2018/124191

(56) References cited:
- WO-A1-2008/059618
- JP-A- S4 743 417
- JP-A- S4 834 087
- JP-A- H01 189 314
- JP-A- 2005 306 667
- JP-A- 2009 039 704
- JP-A- 2009 173 535
- JP-A- 2011 514 239
- JP-A- 2013 528 712

## Description

### Technical Field

The present invention relates to a filtration body formed of a layered double hydroxide carried on a carrier including a thermally fusible fiber, and also to a method for producing the same.

### Background Art

A layered double hydroxide, such as hydrotalcite, is structured such that various ions, molecules, and the like can be intercalated between layers, allowing for the development of an anion exchange ability. Therefore, layered double hydroxides have been utilized in filtration bodies that adsorb and remove harmful substances and the like, for example.

Conventionally, as a filtration body using a layered double hydroxide, for example, a filtration body obtained by blending a binder with a powder of a layered double hydroxide, and molding the blend (see, e.g., Patent Literature 1), or a filtration body obtained by filling a column with granules of a layered double hydroxide prepared using a granulator or the like (see, e.g., Patent Literature 2) is known.

Meanwhile, as a filtration body using activated carbon, a filtration body in which a thermally fusible fiber serves as a carrier, and fibers or particles of activated carbon are attached to the surface of the fiber that has been fused by heating, is known (see, e.g., Patent Literature 3 and Patent Literature 4) .

Patent Literature 1: Patent No. 4709498
Patent Literature 2: Patent No. 5363817
Patent Literature 3: Patent No. 1938657
Patent Literature 4: Patent No. 2986054

JP 2005 306667 A describes making a filtration material by moulding a layered double hydroxide with a crystallite size of 20 nm or less with an organic or inorganic binder. Alternatively, the layered double hydroxide is supported on a filter.

### Summary of Invention

### Technical Problem

However, a conventional filtration body using a layered double hydroxide has a problem in that the distribution of the layered double hydroxide in the filtration body is non-uniform, such as the case where a powder or granules of the layered double hydroxide concentrate in a lower part of the filtration body, for example. In addition, there also has been a problem in that in the case where a binder is blended, the surface of a powder or granules of the layered double hydroxide is covered with the binder, resulting in the deterioration of properties as a layered double hydroxide. Accordingly, a conventional filtration body using a layered double hydroxide has low filtration efficiency.

Thus, an object of the present invention is to provide a filtration body capable of uniformizing the distribution of a layered double hydroxide in the filtration body and also preventing the surface of the layered double hydroxide from being covered with a binder or the like, thereby making it possible to improve the conventional filtration efficiency, and also a method for producing the same.

### Solution to Problem

In order to achieve the above object, the filtration body of the prevent invention is described in claim 1.

In this case, the thermally fusible fiber may be a two-layer conjugate fiber formed of a high-melting-point fiber coated with a low-melting-point fiber.

The filtration body is configured such that layered double hydroxide granules that cannot pass the mesh of the reticulated carrier are carried.

In addition, it is preferable that the layered double hydroxide has a specific surface area of 20 m²/g or more, more preferably a specific surface area of 70 m²/g or more.

In addition, it is preferable that the layered double hydroxide granules, used in the present invention, are produced by applying a predetermined pressure to a material containing a layered double hydroxide and water to remove moisture to a moisture content of 70% or less, followed by drying under conditions having a temperature of 90°C or more and 110°C or less.

In addition, the method for producing a filtration body of the present invention is described in claim 6.

### Advantageous Effects of Invention

According to the present invention, the distribution of a layered double hydroxide in the filtration body can be uniformized, and further, the surface of the layered double hydroxide can be prevented from being covered with a binder or the like, As a result, the filtration body of the present invention has lower filtration resistance than before, and also the properties of the layered double hydroxide are sufficiently exhibited.

### Brief Description of Drawings

Fig. 1 is a partial side view showing a part of a filtration body
Fig. 2 is a partial perspective view showing a part of a filtration body.
Fig. 3 is a partial side view showing the filtration body according to a configuration of the present invention.
Fig. 4 is a partial decomposed perspective view showing a part of the filtration body of the present invention
Fig. 5 is a partial side view showing the filtration body according to another configuration of the present invention.

### Best Mode for Carrying Out the Invention

The filtration body of the present invention is described in claim 1.

First, a layered double hydroxide used in the filtration body of the present invention and a method for producing the same will be described.

A layered double hydroxide is a non-stoichiometric compound represented by general formula M²⁺₁₋ₓM³⁺ₓ(OH)₂(Aⁿ⁻)_{x/n}·mH₂O (wherein M²⁺ is a divalent metal ion, M³⁺ is a trivalent metal ion, Aⁿ⁻ is an anion, 1/6 < x <1/3, and m and n are positive integers), and is sometimes referred to as a hydrotalcite-like compound. Examples of divalent metal ions (M²⁺) include Mg²⁺, Fe²⁺, Zn²⁺, Ca²⁺, Li²⁺, Ni²⁺, Co²⁺, and Cu²⁺. In addition, examples of trivalent metal ions (M³⁺) include Al³⁺, Fe³⁺, Cr³⁺, and Mn³⁺. In addition, examples of anions (Aⁿ⁻) include ClO₄⁻, CO₃²⁻, HCO₃⁻, PO₄³⁻, SO₄²⁻, SiO₄⁴, OH⁻, Cl⁻, NO₂ and NO₃⁻.

In the layered double hydroxide used in the filtration body of the present invention, any divalent metal ions (M²⁺), trivalent metal ions (M³⁺) , and anions (Aⁿ⁻) may be used. In addition, in the layered double hydroxide, the stacking style of hydroxide layer sheets may be a rhombohedral structure or a hexagonal structure.

In addition, the layered double hydroxide used in the filtration body of the present invention has a crystallite size of 20 nm or less, preferably 10 nm or less. In addition, the average crystallite size is preferably 10 nm or less.

In addition, the specific surface area of the layered double hydroxide used in the filtration body of the present invention is not particularly limited, and the specific surface area by the BET method may be 20 m²/g or more, preferably 30 m²/g or more, still more preferably 50 m²/g or more, and still more preferably 70 m²/g or more. The upper limit of the specific surface area is not particularly limited. Incidentally, the specific surface area by the BET method can be determined, for example, by measuring the nitrogen adsorption-desorption isotherm using a specific surface area/pore distribution analyzer, and preparing a BET-plot from the measurement results .

In addition, the layered double hydroxide used in the filtration body of the present invention maybe a calcined product of a layered double hydroxide. The calcined product can be obtained, for example, by calcining a layered double hydroxide at about 500°C or more.

Hereinafter, a specific method for producing the layered double hydroxide used in the filtration body of the present invention will be described.

For example, a layered double hydroxide represented by general formula Mg²⁺₁₋ₓAl³⁺ₓ(OH)₂(Aⁿ⁻)_{x/n}·mH₂O (Aⁿ⁻ is an n-valent anion, and m > 0) can be produced by the following method.

First, an acidic solution containing aluminum ions and magnesium ions is prepared.

The aluminum source of aluminum ions is not limited to a specific substance as long as it generates aluminum ions in water. For example, it is possible to use alumina, sodium aluminate, aluminum hydroxide, aluminum chloride, aluminum nitrate, bauxite, a residue of alumina production from bauxite, aluminum sludge, and the like. In addition, these aluminum sources may be used alone, and it is also possible to use a combination of two or more kinds.

In addition, the magnesium source of magnesium ions is not limited to a specific substance as long as it generates magnesium ions in water. For example, it is possible to use brucite, magnesium hydroxide, magnesite, a calcined product of magnesite, and the like. These magnesium sources may be used alone, and it is also possible to use a combination of two or more kinds.

Incidentally, the aluminum compound as an aluminum source and the magnesium compound as a magnesium source do not have to be completely dissolved as long as aluminum ions and magnesium ions are present in the acidic solution.

In addition, it is known that in a highly crystalline layered double hydroxide represented by Mg²⁻₁₋ₓAl³⁺ₓ(OH)₂ (Aⁿ⁻)_{x/n}·mH₂O, the molar ratio between aluminum ions and magnesium ions is 1:3 (x = 0.25). Therefore, the molar ratio between aluminum ions and magnesium ion in the acidic solution is preferably within a range of 1:5 to 1:2. When the molar ratio is within this range, without wasting the aluminum source and the magnesium source, a layered double hydroxide can be produced advantageously in terms of material balance.

The acid contained in the acidic solution is not particularly limited as long as it makes an aqueous solution acidic, and it is possible to use nitric acid or hydrochloric acid, for example.

Next, the acidic solution containing aluminum ions and magnesium ions and an alkaline solution containing an alkali are mixed in predetermined proportions . As a result, a layered double hydroxide is generated. Mixing can be performed by a method in which the acidic solution is added to the alkaline solution at once and mixed, or the acidic solution is added dropwise to the alkaline solution. However, other methods are also possible.

Here, the alkali contained in the alkaline solution is not particularly limited as long as it makes an aqueous solution alkaline, and it is possible to use sodium hydroxide or calcium hydroxide, for example. In addition, it is also possible to use sodium carbonate, potassium carbonate, ammonium carbonate, aqueous ammonia, sodium borate, potassium borate, or the like. They may be used alone, and it is also possible to use a combination of two or more kinds. As the alkaline solution, one prepared to pH 8 to 14 may be used, and one prepared to pH 8 to 11 is preferably used.

Incidentally, as the aging time after the completion of mixing of the acidic solution and the alkaline solution is shortened, the growth of crystals can be suppressed, and a layered double hydroxide having a reduced crystallite size or a layered double hydroxide having an increased specific surface area can be produced.

As a method for stopping aging, a method in which after the completion of mixing of the acidic solution and the alkaline solution, the pH of the mixture is reduced to a value at which the crystal growth of the layered double hydroxide stops can be mentioned. For example, in the case of the layered double hydroxide represented by general formula Mg²⁺₁₋ₓAl³⁺ₓ(OH)₂(Aⁿ⁻)_{x/n}·mH₂O, the pH may be made 9 or less. Specifically, aging can be stopped by dilution with water within 120 minutes after the completion of mixing of the acidic solution and the alkaline solution, preferably within 60 minutes, and more preferably at the same time. In addition, aging can also be stopped by removing moisture. In order to remove moisture, a suitable separation method for separating moisture from the layered double hydroxide, such as suction filtration or centrifugal separation, may be used. In addition, in order to reliability prevent aging from occurring, it is also possible to wash the layered double hydroxide immediately after the completion of mixing of the acidic solution and the alkaline solution. Incidentally, chlorides such as NaCl generated in the course of synthesis may be contained.

The layered double hydroxide immediately after the removal of moisture as described above is in a gel form. The layered double hydroxide used in the present invention may be in such a gel form or may also be dried into a powder form or a granular form.

The layered double hydroxide made into a granular form, that is, granules, may be produced by the following method, for example.

First, to the layered double hydroxide generated as described above, a predetermined pressure, such as a pressure of 0. 9 MPa or more, is applied using a dehydrator such as a filter press, thereby removing moisture as much as possible. Next, drying is performed at a temperature equal to or lower than the dehydration temperature of the crystal water of the layered double hydroxide. In other words, only water outside crystals of the layered double hydroxide is dried. Specifically, a layered double hydroxide whose moisture content has been reduced to 70% or less, preferably 65% or less, and still more preferably 60% or less by applying a pressure of 0.9 MPa or more is dried so that the moisture content of granules of the layered double hydroxide, which are the end product, will be 10% or more and 20% or less, preferably 10% or more and 15% or less, and still more preferably 11% or more and 12% or less. Here, the reason why the moisture content of the granules of the layered double hydroxide is maintained at 10% or more is that when the moisture content of the granules of the layered double hydroxide is less than 10%, upon contact with a solution or the like, the granules of the layered double hydroxide rapidly absorb moisture and expand in volume, making it impossible to maintain the particle size. Incidentally, a moisture content is the mass of water relative to the mass of the entire layered double hydroxide including moisture. The mass of moisture contained in the layered double hydroxide was measured in accordance with Japanese Industrial Standard, "Test Method For Water Content Of Soils" (JIS A 1203:1999).

Incidentally, the drying temperature may be any temperature as long as it is equal to or lower than the dehydration temperature of the crystal water of the layered double hydroxide . However, in order to increase the particle size of the granules of the layered double hydroxide, drying is preferably performed at a relatively low temperature. However, when the temperature of drying is too low, the granules of the layered double hydroxide are easily dissolved in water. Therefore, specifically, the favorable drying temperature is 25°C or more and 125°C or less, preferably 90°C or more and 110°C or less, and still more preferably 95°C or more and 105°C or less.

In addition, this drying may be performed in any manner. For example, an ordinary drying furnace or the like may be used. Needless to say, natural drying at room temperature is also possible. In addition, in terms of the form stability of the granules of the layered double hydroxide, it is preferable that the humidity at the time of drying is controlled high. For example, the amount of water vapor in the drying furnace may be controlled to be near the saturated water vapor amount (humidity of 90% to 100%).

In addition, it is also possible that the granules of the layered double hydroxide thus dried are sieved, and the deposited chloride or the like is removed.

In addition, the particle size of the granules of the layered double hydroxide may be adjusted according to the intended use of the filtration body or its kind. In this case, the favorable particle size of the granules of the layered double hydroxide is 0.24 mm or more, for example, preferably 0.36 mm or more, and still more preferably 1 mm or more and 2 mm or less. The adjustment of the particle size maybe performed in any manner. For example, it is possible that the granules are crushed with a hammer or the like and sieved through a mesh of a desired size.

Next, the thermally fusible fiber used in the filtration body of the present invention will be described.

The thermally fusible fiber used in the filtration body of the present invention is not particularly limited at long as it is a fiber that can be fused by heating, but is preferably a two-layer conjugate fiber formed of a high-melting-point fiber coated with a low-melting-point fiber. For example, it is possible to use a fiber in which a polyolefin-based fiber or an EVA-based fiber having a relatively low melting point coats a core composed of a fiber having a higher melting point. Accordingly, the layered double hydroxide can be attached by heating to a temperature at which only the low-melting-point surface layer is fused. As a result, the shape of the carrier can be maintained.

The carrier used in the filtration body of the present invention is reticulated.

According to the present invention, wherein the carrier is reticulated, a filtration body in which the layered double hydroxide is uniformly distributed on the reticulated carrier composed of a thermally fusible fiber as a constituent yarn is obtained.

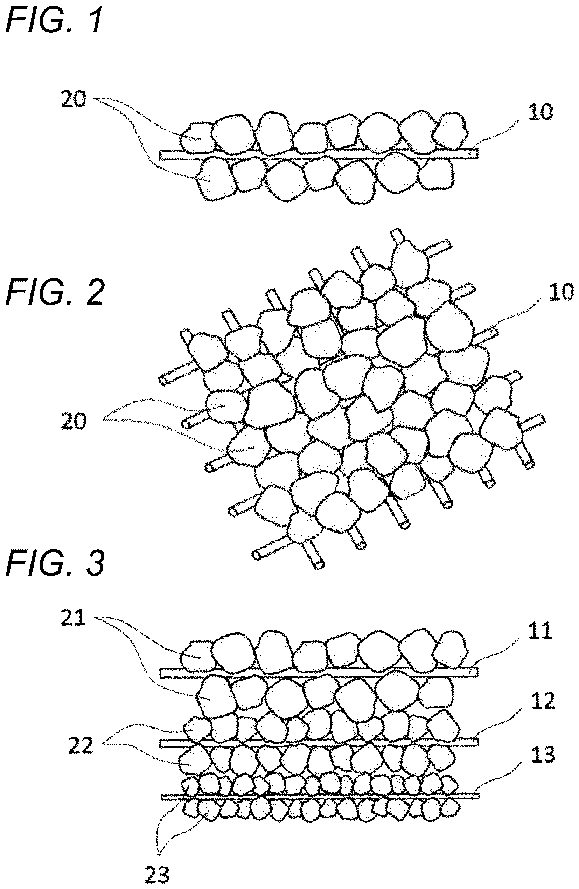

A filtration body using a reticulated carrier can be produced as follows, for example. First, a reticulated carrier 10 composed of a two-layer conjugate fiber as a constituent yarn, in which a high-melting-point chemical fiber is coated with a low-melting-point surface layer of the same series, is prepared. Next, the reticulated carrier 10 is heated to a temperature at which only the low-melting-point surface layer is fused, and passed through a vibration tank containing layered double hydroxide granules 20 of a predetermined size, thereby attaching the layered double hydroxide granules 20 thereto. Next, drying is performed, and granules of the layered double hydroxide that are not fixed through such drying are shaken off. As a result, a filtration body having the layered double hydroxide granules 20 attached to each side of the reticulated carrier 10 is accomplished. Fig. 1 shows a partial side view enlarging and showing a part of the filtration body of the present invention produced by the method described above. In addition, in Fig. 2 shows a partial perspective view enlarging and showing a part of the filtration body.

In addition, the filtration body using a reticulated carrier can also be produced as follows. First, layered double hydroxide granules 20 are mounted on a reticulated carrier 10. At this time, the layered double hydroxide granules 20 at least contain granules that cannot pass the mesh of the reticulated carrier 10. Next, a low-melting-point surface layer of the reticulated carrier 10 is thermally fused to attach the mounted layered double hydroxide granules 20 to the reticulated carrier 10. Next, cooling is performed to fix the granules, and granules of the layered double hydroxide that are not attached are shaken off. As a result, a filtration body in which at least a layered double hydroxide 20 that cannot pass through the mesh is attached to one side (upper surface) of the reticulated carrier 10 is accomplished.

The filtration body of the present invention is configured such that a plurality of kinds of carriers having different mesh sizes, each having a layered double hydroxide carried thereon, are sequentially laminated in such a manner that a carrier having a larger mesh size is placed in an upper part. As a result, a filtration body which has low filtration resistance and is particularly suitable for deep bed filtration is obtained.

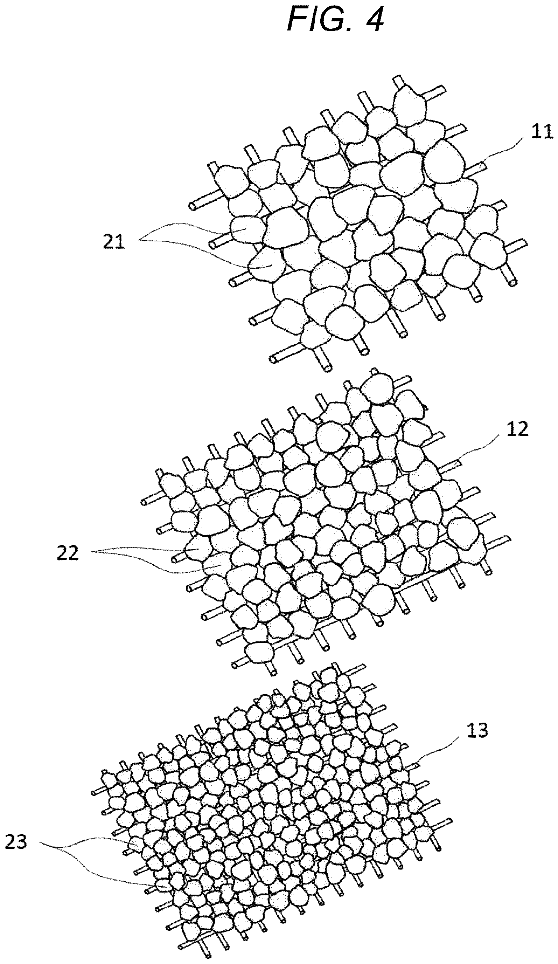

The filtration body configured such that a plurality of kinds of carriers having different mesh sizes, each having a layered double hydroxide carried thereon, can be produced as follows, for example. First, a plurality of kinds of reticulated carriers 10 having different mesh sizes are prepared (e.g. three kinds of reticulated carriers, a reticulated carrier 11 having a mesh of 4 × 4 mm, a reticulated carrier 12 having a mesh of 3 × 3 mm, and a reticulated carrier 13 having a mesh of 2 × 2 mm, are prepared) . Next, each carrier is heated to a temperature at which only a low-melting-point surface layer is fused, and passed through a vibration tank containing layered double hydroxide granules 20 of a predetermined size, thereby attaching layered double hydroxide granules 20 having a particle size smaller than the mesh of the carrier (e.g., layered double hydroxide granules 21 having an average particle size of 3 mm are attached to a 4 × 4 mm-mesh carrier, layered double hydroxide granules 22 having an average particle size of 2 mm to a 3 × 3 mm-mesh carrier, and layered double hydroxide granules 23 having an average particle size of 1.5 mm to a 2 × 2 mm-mesh carrier). Next, drying is performed, and layered double hydroxide granules 20 that are not attached through such drying are shaken off. Finally, the filtration bodies thus obtained are sequentially laminated in such a manner that a filtration body having a larger mesh size is placed in an upper part. Fig. 3 shows a partial side view enlarging and showing a part of the filtration body of the present invention produced by the method described above. In addition, in Fig. 4 shows a partial decomposed perspective view enlarging and showing a part of the filtration body.

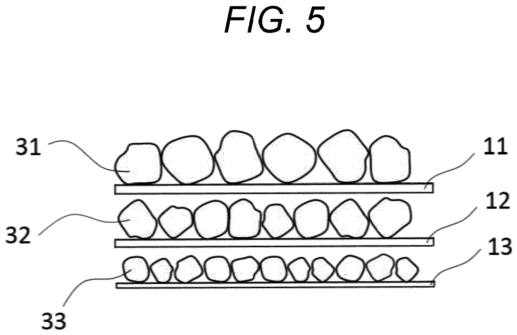

The filtration body configured such that a plurality of kinds of carriers having different mesh sizes, each having a layered double hydroxide carried thereon, is produced according to the invention as follows. First, a plurality of kinds of reticulated carriers having different mesh sizes are prepared (e.g. three kinds of reticulated carriers, a reticulated carrier 11 having a mesh of 4 × 4 mm, a reticulated carrier 12 having a mesh of 3 × 3 mm, and a reticulated carrier 13 having a mesh of 2 × 2 mm, are prepared) . Next, the carriers are sequentially laminated in such a manner that a carrier having a larger mesh size is placed in an upper part, and the carriers are connected to each other. Next, a layered double hydroxide is supplied to an uppermost part of the reticulated carriers, in which the carriers are laminated and connected to each other, (e.g., reticulated carrier 11). At this time, granules of the layered double hydroxide at least contain granules that cannot pass the mesh of each reticulated carrier 10 (e.g., the layered double hydroxide granules are a mixture containing at least layered double hydroxide granules 31 that cannot pass the mesh of the reticulated carrier 11, layered double hydroxide granules 32 that cannot pass the mesh of the reticulated carrier 12, and layered double hydroxide granules 33 that cannot pass the mesh of the reticulated carrier 13). Next, the reticulated carrier is shaken. As a result, of the layered double hydroxide granules 20, a layered double hydroxide that can pass the mesh of each reticulated carrier is shaken off to a lower part of the reticulated carriers, resulting in a state where layered double hydroxide granules are mounted on each reticulated carrier (e.g., a state where at least layered double hydroxide granules 31 are mounted on the reticulated carrier 11, at least layered double hydroxide granules 32 are mounted on the reticulated carrier 12, and at least layered double hydroxide granules 33 are mounted on the reticulated carrier 13). After the reticulated carriers are shaken until layered double hydroxide granules (e.g., layered double hydroxide granules 33) are mounted on the lowermost part of the reticulated carriers (e.g., reticulated carrier 13), low-melting-point surface layers of the reticulated carriers are thermally fused to attach the mounted layered double hydroxide granules to each reticulated carrier. Next, cooling is performed to fix the granules, and granules of the layered double hydroxide that are not attached are shaken off. Fig. 5 shows a partial side view enlarging and showing a part of the filtration body of the present invention produced by the method described above.

### Examples

Hereinafter, the layered double hydroxide used in the filtration body of the present invention will be described. However, the present invention is not limited to these examples .

### Example 1 (Specific Surface Area)

Four kinds of layered double hydroxides 1 to 4 produced by different methods were prepared, and each specific surface area was measured. In the measurement of the specific surface area, nitrogen gas was adsorbed onto the powder particle surface of each layered double hydroxide at a liquid nitrogen temperature (-196°C), and the specific surface area was calculated from its amount by the BET method. The results are shown in Table 1.

**[Table 1]**

| | BET specific surface area (m²/g) |
|---|---|
| Layered double hydroxide 1 | 18.2 |
| Layered double hydroxide 2 | 70.1 |
| Layered double hydroxide 3 | 50.3 |
| Layered double hydroxide 4 | 30.2 |

Incidentally, The details of each layered double hydroxide 1 to 4 are as follows.

### (1) Layered double hydroxide 1

A layered double hydroxide manufactured by Wako Pure Chemical Industries, Ltd., (distributor code: 324-87435) was used as the layered double hydroxide 1.

### (2) Layered double hydroxide 2

First, 16.92 g of magnesium chloride hexahydrate (manufactured by Wako Pure Chemical Industries, Ltd.) and 10.06 g of aluminum chloride hexahydrate (manufactured by Wako Pure Chemical Industries, Ltd.) are dissolved in 26.98 g of distilled water to prepare an acidic solution. In addition, 10 g of sodium hydroxide (manufactured by Wako Pure Chemical Industries, Ltd.) is dissolved in 30 g of distilled water to prepare an alkaline solution. Subsequently, the acidic solution and the alkaline solution were mixed, and, without an interval, 281.85 g of distilled water was immediately added to the mixed solution to adjust the pH to 7.5 to 8.5. Then, after 24 hours, the solution was filtered, and the obtained filtrate was dried at 120°C for 10 hours to give the layered double hydroxide 2.

### (3) Layered double hydroxide 3

First, 16.92 g of magnesium chloride hexahydrate (manufactured by Wako Pure Chemical Industries, Ltd.) and 10.06 g of aluminum chloride hexahydrate (manufactured by Wako Pure Chemical Industries, Ltd.) are dissolved in 26.98 g of distilled water to prepare an acidic solution. In addition, 10 g of sodium hydroxide (manufactured by Wako Pure Chemical Industries, Ltd.) is dissolved in 30 g of distilled water to prepare an alkaline solution. Subsequently, the acidic solution and the alkaline solution were mixed. Without an interval, 281.85 g of distilled water was immediately added to the mixed solution, and then an aqueous sodium hydroxide solution was added to adjust the pH to 10.0. Then, after 24 hours, the solution was filtered, and the obtained filtrate was dried at 120°C for 10 hours to give the layered double hydroxide 3.

### (4) Layered double hydroxide 4

First, 16.92 g of magnesium chloride hexahydrate (manufactured by Wako Pure Chemical Industries, Ltd.) and 10.06 g of aluminum chloride hexahydrate (manufactured by Wako Pure Chemical Industries, Ltd.) are dissolved in 26.98 g of distilled water to prepare an acidic solution. In addition, 10 g of sodium hydroxide (manufactured by Wako Pure Chemical Industries, Ltd.) is dissolved in 30 g of distilled water to prepare an alkaline solution. Subsequently, the acidic solution and the alkaline solution were mixed. Without an interval, 281.85 g of distilled water was immediately added to the mixed solution, and then an aqueous sodium hydroxide solution was added to adjust the pH to 12.0. Then, after 24 hours, the solution was filtered, and the obtained filtrate was dried at 120°C for 10 hours to give the layered double hydroxide 4.

### Reference Signs List

- 10: Reticulated carrier
- 11: Reticulated carrier
- 12: Reticulated carrier
- 13: Reticulated carrier
- 20: Layered double hydroxide granule
- 21: Layered double hydroxide granule
- 22: Layered double hydroxide granule
- 23: Layered double hydroxide granule
- 31: Layered double hydroxide granule
- 32: Layered double hydroxide granule
- 33: Layered double hydroxide granule

## Claims

1. A filtration body comprising a layered double hydroxide having a crystallite size of 20 nm or less carried on a carrier including a thermally fusible fiber,
wherein the layered double hydroxide is in the form of granules and is attached to the carrier by thermally fusing the thermally fusible fiber,
wherein the carrier is reticulated carrying layered double hydroxide granules, that cannot pass through the mesh thereof and the filtration body comprises a plurality of kinds of the carriers having different mesh sizes, each having the layered double hydroxide carried thereon, wherein the carriers are sequentially laminated in such a manner that the carrier having a larger mesh size is placed in an upper part.

2. The filtration body according to claim 1, wherein the thermally fusible fiber is a two-layer conjugate fiber formed of a high-melting-point fiber coated with a low-melting-point fiber.

3. The filtration body according to any one of claims 1 or 2, wherein the layered double hydroxide has a specific surface area of 20 m²/g or more.

4. The filtration body according to any one of claims 1 to 3, wherein the layered double hydroxide has a specific surface area of 70 m²/g or more.

5. A method for producing a filtration body formed of a layered double hydroxide granules carried on a reticulated carrier including a thermally fusible fiber and that the method for producing a filtration body comprises:
a mounting step of mounting layered double hydroxide granules on the reticulated carrier; carrying layered double hydroxide granules, that cannot pass through the mesh thereof and
after the mounting step, an attaching step of attaching the mounted layered double hydroxide granules to the reticulated carrier by thermally fusing the thermally fusible fiber, wherein
the reticulated carrier is obtained by sequentially laminating a plurality of kinds of carriers having different mesh sizes in such a manner that a carrier having a larger mesh size is placed in an upper part, and
in the mounting step, layered double hydroxide granules are supplied to an uppermost part of the laminated reticulated carriers, and the reticulated carriers are shaken until the layered double hydroxide granules are mounted on a lowermost part of the reticulated carriers.

6. A method according to claim 5, wherein the layered double hydroxide granules are produced by applying a predetermined pressure to a material containing a layered double hydroxide and water to remove moisture to a moisture content of 70% or less, followed by drying under conditions having a temperature of 90°C or more and 110°C or less.

## Patentansprüche

1. Filtrationskörper, umfassend ein geschichtetes Doppelhydroxid mit einer Kristallitgröße von 20 nm oder weniger, getragen auf einem Träger, der eine thermisch schmelzbare Faser einschließt,
wobei das geschichtete Doppelhydroxid in Form von Granulat vorliegt und durch thermisches Schmelzen der thermisch schmelzbaren Faser an dem Träger befestigt ist,
wobei der Träger netzartig ist und geschichtetes Doppelhydroxidgranulat trägt, das nicht durch seine Maschen passt, und der Filtrationskörper eine Vielzahl von Arten der Träger mit unterschiedlichen Maschengrößen umfasst, auf denen jeweils das geschichtete Doppelhydroxid getragen wird, wobei die Träger nacheinander so laminiert sind, dass der Träger mit einer größeren Maschengröße in einem oberen Teil platziert ist.

2. Filtrationskörper nach Anspruch 1, wobei die thermisch schmelzbare Faser eine zweischichtige konjugierte Faser ist, die aus einer Faser mit hohem Schmelzpunkt gebildet ist, die mit einer Faser mit niedrigem Schmelzpunkt beschichtet ist.

3. Filtrationskörper nach einem der Ansprüche 1 oder 2, wobei das geschichtete Doppelhydroxid eine spezifische Oberfläche von 20 m²/g oder mehr aufweist.

4. Filtrationskörper nach einem der Ansprüche 1 bis 3, wobei das geschichtete Doppelhydroxid eine spezifische Oberfläche von 70 m²/g oder mehr aufweist.

5. Verfahren zur Herstellung eines Filtrationskörpers, der aus einem geschichteten Doppelhydroxidgranulat gebildet ist, das auf einem netzartigen Träger getragen wird, der eine thermisch schmelzbare Faser einschließt, und dass das Verfahren zur Herstellung eines Filtrationskörpers umfasst:
einen Montageschritt des Montierens von geschichtetem Doppelhydroxidgranulat auf dem netzartigen Träger; Tragen von geschichtetem Doppelhydroxidgranulat, das nicht durch seine Maschen passt, und
nach dem Montageschritt einen Befestigungsschritt des Befestigens des montierten geschichteten Doppelhydroxidgranulats an dem netzartigen Träger durch thermisches Schmelzen der thermisch schmelzbaren Faser, wobei
der netzartige Träger erhalten wird, indem eine Vielzahl von Arten von Trägern mit unterschiedlichen Maschengrößen so nacheinander laminiert werden, dass ein Träger mit einer größeren Maschengröße in einem oberen Teil platziert ist, und
in dem Montageschritt geschichtetes Doppelhydroxidgranulat einem obersten Teil der laminierten netzartigen Träger zugeführt wird und die netzartigen Träger geschüttelt werden, bis das geschichtete Doppelhydroxidgranulat auf einem untersten Teil der netzartigen Träger montiert ist.

6. Verfahren nach Anspruch 5, wobei das geschichtete Doppelhydroxidgranulat hergestellt wird durch Anwenden eines vorbestimmten Drucks auf ein Material, das ein geschichtetes Doppelhydroxid und Wasser enthält, um Feuchtigkeit bis auf einen Feuchtigkeitsgehalt von 70 % oder weniger zu entziehen, gefolgt von Trocknen unter Bedingungen mit einer Temperatur von 90 °C oder mehr und 110 °C oder weniger.

## Revendications

1. Corps de filtration comprenant un hydroxyde double lamellaire ayant une taille de cristallite de 20 nm ou moins porté sur un support incluant une fibre pouvant être fondue thermiquement,
dans lequel l'hydroxyde double lamellaire est sous la forme de granulés et est fixé au support en faisant fondre thermiquement la fibre pouvant être fondue thermiquement,
dans lequel le support est réticulé portant des granulés d'hydroxyde double lamellaire, qui ne peuvent pas passer à travers le maillage de celui-ci et le corps de filtration comprend une pluralité de types des supports ayant différentes tailles de maillage, chacun ayant l'hydroxyde double lamellaire porté sur celui-ci, dans lequel les supports sont stratifiés séquentiellement de telle manière que le support ayant une plus grande taille de maillage est placé dans une partie supérieure.

2. Corps de filtration selon la revendication 1, dans lequel la fibre pouvant être fondue thermiquement est une fibre conjuguée à deux lamelles formée d'une fibre à haut point de fusion revêtue d'une fibre à bas point de fusion.

3. Corps de filtration selon l'une quelconque des revendications 1 ou 2, dans lequel l'hydroxyde double lamellaire a une aire de surface spécifique de 20 m²/g ou plus.

4. Corps de filtration selon l'une quelconque des revendications 1 à 3, dans lequel l'hydroxyde double lamellaire a une aire de surface spécifique de 70 m²/g ou plus.

5. Procédé de production d'un corps de filtration formé d'un granulés d'hydroxyde double lamellaire portés sur un support réticulé incluant une fibre pouvant être fondue thermiquement et que le procédé de production d'un corps de filtration comprend :
une étape de montage de montage de granulés d'hydroxyde double lamellaire sur le support réticulé ; portant des granulés d'hydroxyde double lamellaire, qui ne peuvent passer à travers le maillage de celui-ci et
après l'étape de montage, une étape de fixation de fixation des granulés d'hydroxyde double lamellaire montés au support réticulé en faisant fondre thermiquement la fibre pouvant être fondue thermiquement, dans lequel
le support réticulé est obtenu en stratifiant séquentiellement une pluralité de types de supports ayant différentes tailles de maillage de telle manière qu'un support ayant une plus grande taille de maillage est placé dans une partie supérieure, et
dans l'étape de montage, des granulés d'hydroxyde double lamellaire sont fournis à une partie la plus haute des supports réticulés stratifiés, et les supports réticulés sont secoués jusqu'à ce que les granulés d'hydroxyde double lamellaire soient montés sur une partie la plus basse des supports réticulés.

6. Procédé selon la revendication 5, dans lequel les granulés d'hydroxyde double lamellaire sont produits en appliquant une pression prédéterminée à un matériau contenant un hydroxyde double lamellaire et de l'eau pour éliminer l'humidité jusqu'à une teneur en humidité de 70 % ou moins, suivi d'un séchage dans des conditions ayant une température de 90 °C ou plus et 110 °C ou moins.
